# EUROPEAN PATENT APPLICATION

(11) **EP 1 736 367 A1**
(43) Date of publication of application: **27.12.2006**
(21) Application number: 04798247.5
(22) Date of filing: 22.11.2004
(51) Int. Cl.: B60R 13/10, B44C 1/17, G09F 7/16

(54) **METHOD OF PAINTING ACRYLIC OR METALLIC REGISTRATION PLATES**

(30) Priority: 24.11.2003 ES 200302746; 22.12.2003 ES 200303030; 05.01.2004 ES 200400011
(71) Applicant: INDUSTRIAS SAMAR'T, S.A., E-17740 Vilafant (Girona) (ES)
(72) Inventor: SANCHEZ CASADEVALL, Enrique, E-17600 Figueres (ES)
(74) Representative: Munoz Garcia, Antonio
(86) International application number: PCT/ES2004/000521
(87) International publication number: WO 2005/049381

(57) **Abstract**

The present invention relates to a process for painting acrylic or metallic license plates consisting of the incorporating of polyester films (1) provided with a bond breaker coating (2) on which a varnish (3) is incorporated and on the latter, characters (4) are incorporated which are fixed on surfaces (11) arranged on a plate (10) or the like by means of the use of pressure, adhesive, electrostatic current, centering columns or holes, vacuum and resin depositing.

## Description

### OBJECT OF THE INVENTION

The present specification relates to a process for painting acrylic or metallic license plates, starting from a polyester film or the like, to which a bond breaker and a varnish are previously applied to subsequently paint the characters, logos or any graphic that is to be transferred to other materials, obtaining the completion of the product, transferring the characters or graphics to the signs and being configured as an invention incorporating a process for the production thereof, doing away with the treatment with bond breaker and varnish and obtaining identical results, but applying a higher temperature in the depositing of the painted graphic so as to transfer it to another material.

As a result of the process, after having painted with special paints or with any other medium the format of the letters, numbers, insignias or signs which are to be transferred to another body in templates of heat resistant materials generally made of polyester, the invention likewise allows achieving that by applying a heat source to the template on the opposite side, which has been painted, the previously painted sign penetrates the desired piece, preventing the drawbacks of paints, drying, solvents, etc.

Through completely planar plates with or without a rib on which the characters or logos painted on the polyester films are engraved, the invention also achieves transferring them to the planar plate due to the action of a fixed or moving heat source, the transfer of the logo or characters to the planar plate being carried out on the front part.

### FIELD OF THE INVENTION

This invention is applicable within the industry dedicated to the manufacture of license plates for vehicles and the like.

### BACKGROUND OF THE INVENTION

To produce acrylic plates, a complex process is used which implies multiple difficulties at the time of their manufacture since the current tendency is to apply the characters on the inner part of the acrylic plate, independently of if this operation is carried out by computer or with decals, even with cutting systems, the distributor thereof having to finish the plate, placing reflecting agents and laminating it, as well as carrying out various subsequent operations.

The current existence of US patent 5,665,475 A is known, which discloses a film for imprinting vehicle license plates by means of hot-stamping. The impression of the characters grouped on the same film onto the license plate occurs due to the application of heat, allowing the fixing of the film by means of an adhesive.

The applicant is not aware of the current existence of an invention with the features described in this specification.

It has been verified that the application of heat must be completely limited for the purpose of introducing the paint on any type of plastic material or material provided with resins, leaving it virtually inalterable if the suitable heat source and paints are used, the support elements on which the characters are fixed having means of retaining the polyester films which aid in achieving the suitable fixing, enhancing the action of the adhesive areas located on the upper and lower ends of the film bearing the graphic to be transferred onto the surface of the plate.

### DESCRIPTION OF THE INVENTION

The process for painting acrylic or metallic license plates proposed by the invention is configured as an evident novelty entailing simplicity and a novel result due to the fact that the characters are transferred on the upper part of the acrylic plate applied by heat and by melting the inks on the material itself, resulting in great durability.

More specifically, the process for painting acrylic or metallic license plates object of the invention is configured from a polyester film or the like to which a bond breaker and a varnish are previously applied so as to subsequently paint the characters, logos or any graphic that are to be transferred to other materials, the product which will transfer the characters or graphics to the signs thereby being finished.

The invention results in a substantially more cost-efficient process in terms of its production, doing away with the treatment with bond breaker and varnish and achieving identical results, but applying a higher temperature in the depositing of the painted graphic so as to transfer it to another material.

The process consists of the incorporation on polyester films of dimensions suitable to the character on which the coating is to be incorporated, being fixed on the outer surface of the area in which the transfer of the coating is to be carried out by means of adhesive areas formed by removable adhesive strips allowing its fixing, and after the incorporation of these polyester films incorporating the mark or coating area on the area to be coated, they are treated by the action of pressure, adhesive, electrostatic current, vacuum, resin depositing or centering holes or columns, achieving that when the polyester films are removed, the surface of the area to be coated is completely covered by the graphic existing on the polyester film after said application.

The invention likewise presents the possibility that by applying heat on the opposite side of the films or templates of heat resistant material, generally polyester, i.e. the side incorporating the painted area, the painted sign or graphic penetrates the piece to which it is to be transferred, overcoming the drawbacks of paints, drying, solvents or the like.

The application of heat obtains introducing the paint on any type of thermoplastic material or material provided with resins, leaving it virtually inalterable if the suitable paint and heat source are used, the application of heat being carried out on the upper part of the template provided by means of painting the signs and graphics, the application of heat being carried out on the side of the template opposite to the one that is provided with the painting by means of metallic elements provided with resistances and controlled by temperature regulators, which can act directly through aluminum, teflon, silicone or other materials that can be adapted to the body that is to be painted and to the template.

Positioning frames are used to locate the templates painted with the signs that are to be transferred, which allow accommodating said templates in the suitable spaces or areas and in the necessary position.

It must be repeated that the application of the transfer of the graphic incorporated on the template on its side opposite to the side provided with the painted graphic is carried out by heat and by the relevant pressure generated from the metallic pieces which, provided with resistances, achieve the required goal.

The supports or templates bearing the painted graphics on their reverse side can have various constituting elements of the support, incorporating means of fixing and retaining the templates, configured as lugs suitable for being incorporated in the openings located on upper tabs of the template, retaining clips of different shapes, as well as adhesive guides, resins, auto-vacuum and electrostatic current, these applications being carried out according to the demanded product and in a multiple application.

The invention can also be configured from the use of completely planar plates preferably made of a metallic material, such as aluminum with or without a rib, on which the characters or logos painted on the polyester films are engraved, transferring them to the planar plate by the action of a fixed or moving heat source, the transfer to the planar plate of metallic material preferably being carried out on the front part.

The invention contemplates the fact that the characters or logos to be transferred are located on the polyester films, transferring them to the planar plate, preferably made of a metallic material, due to the action of a fixed or moving heat source, and at the same time that the logo or character is being transferred on the front part, it is deep-drawn on the rear part with the use of a die, achieving the deep drawing and painting or the engraving and painting in a single operation.

The deep drawing of the planar plate, preferably made of a metallic material, is carried out by means of a male die on which the figure or character that is to be deep drawn has been completely or partially engraved, silicone rubber or a material with similar properties to which heat is transmitted through a metallic part provided with resistances acting as the female die.

At the time of deep drawing, the male die located on a positioning compounder deep draws the plate on its rear part, while the polyester template with the painted figure or character is located on the upper part, and due to the action of the male die, the plate with the polyester template is clamped against the silicone rubber heated by a metallic base provided with resistances, generating the configuration of the plate according to the shape of the die, and at the same time the polyester with the painted figure is transferred to the plate due to the action of heat.

### DESCRIPTION OF THE DRAWINGS

To complement the description being made and for the purpose of aiding to better understand the features of the invention, a set of drawings is attached to the present specification as an integral part thereof in which the following has been shown with an illustrative and non-limiting character.

Figure 1 shows a view of different elements used in the object of the invention corresponding to a process for painting acrylic or metallic license plates.

Figure 2 shows a sectional view of the base on which the application of the invention is carried out.

Figure 3 shows a perspective view of a second embodiment of the support, viewing in this graphic representation the line of rounded projecting lugs inserted in the openings existing on the upper tabs of the template bearing the graphic representation that is to be transferred onto the suitable surface.

Figure 4 shows another perspective view of the support onto which the characters generated from the action of the heat of the aluminum parts provided with resistances are applied, incorporating an alignment of semi-rounded lugs acting as flanges longitudinally positioned on the upper part at a different height than those provided in Figure 1.

Figure 5 again shows a view of the support plate incorporating an alignment of triangular-shaped fixing elements acting as flanges longitudinally located on the upper part of the area in which the incorporation of the characters incorporated on the template will be carried out.

Figure 6 again shows a view of the support of the characters which has an adhesive guide on the front upper part rather than the actuation elements enhancing the transverse adhesive lines.

Figure 7 again shows the object shown in the previous figures provided with a line of resin in which the projecting tabs on the upper area of the template are fixed.

Figure 8 shows a view of the object represented in the previous figures, incorporating perforations collaborating by means of auto-vacuum in the fixing of the template bearing the character.

Figure 9 shows a view of the body of the support of the characters, having a line of electrostatic current so as to enhance the fixing of the template.

Figure 10 shows all the pieces and elements used in a third embodiment of the invention.

Figure 11 shows the pieces represented in Figure 10 duly coupled to one another.

Figure 12 shows a perspective view of the positioning of the elements generating the transfer of the graphic and, at the same time, the deep drawing by male die located on the lower part of the license plate located on the compounder.

### PREFERRED EMBODIMENT OF THE INVENTION

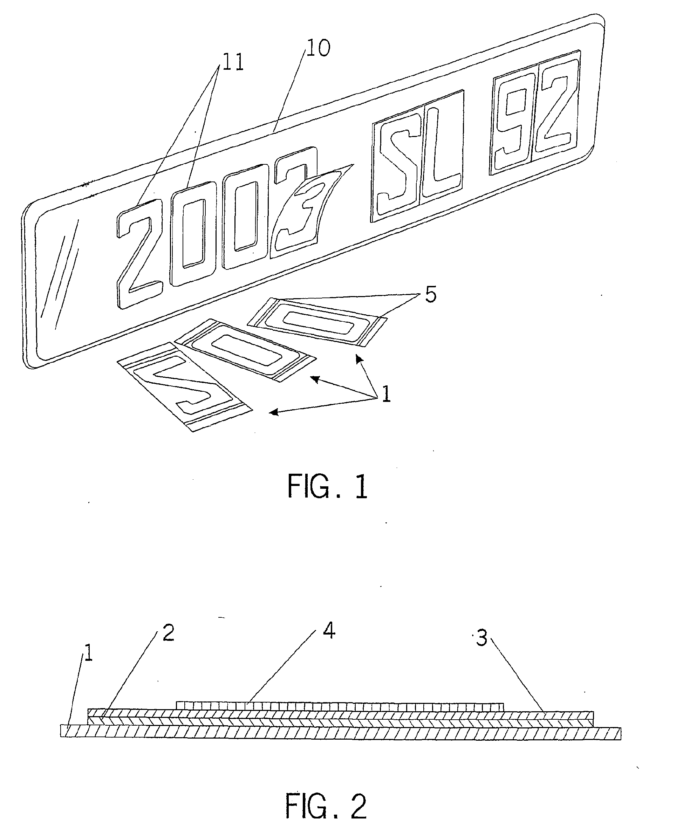

In view of Figures 1 and 2, it can be observed how the process for painting acrylic or metallic license plates (10) obtained from pieces subjected to a prior treatment arranging on their surface structure characters (11) on which polyester films (1) are superimposed, provided with adhesive means (5) configured as removable adhesives located in transverse bands in the upper and lower area of the area corresponding to the area to be coated, the polyester body (1) having a previously applied bond breaker (2) and a varnish (3), arranging on the surface of the varnish the characters (4) to be incorporated on the surface of areas (11) by means of the chosen treatment.

Once the plate (10) is prepared with its characters, a fixed or moving heat source is applied, thereby achieving the release of the characters (4) and the transfer of their surface mark to the acrylic plate (10) on the characters (11).

The polyester film (1) is subsequently separated, the plate thereby being completely finished.

The character can be applied without an adhesive by means of auto-electrostatic means due the attraction of plastic, with an adhesive on the entire surface, or the material bearing the graphics is able to transfer multicolored elements.

The material bearing the coating characters (4) can also be placed on the acrylic plate (10), specifically on areas (11) through positioning elements.

The invention is also able to act by vacuum or by resin depositing, including electrostatic current.

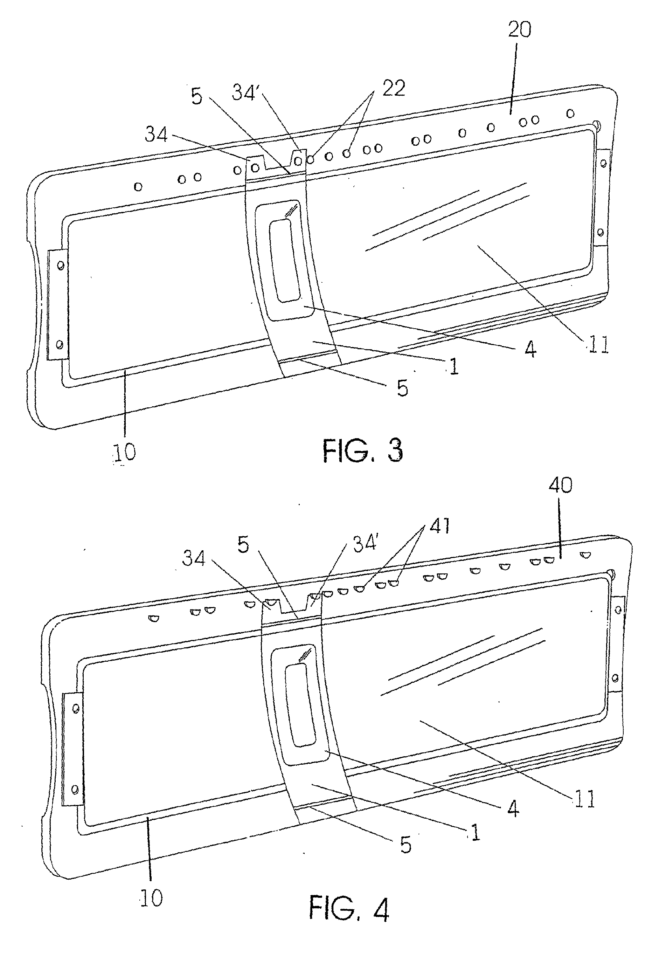

The invention uses films of heat resistant material, generally polyester films, with a bond breaker coating and a varnish on which the letters, numbers, insignias, signs, graphics or logos to be transferred to another body are located, locating the templates, generally polyester templates, in the different positioning frames with reference numbers (20), (40), (50), (60), (70), (80) and (90), in which the license plate (10) is positioned, and by applying a heat source on the opposite side of the character (4), the latter passes to the surface of area (11), as can be seen in Figures 3, 4, 5, 6, 7, 8 and 9.

The application of heat obtains introducing the constituent paint of the characters (4) on any type of thermoplastic material or material provided with resins, leaving it virtually inalterable if the suitable paint and heat source are used, it being necessary to indicate that the application of heat is carried out on the upper part of the templates (1) provided with the relevant signs and specifically on the side opposite to the side provided with the painted signs, the transfer of the sign being carried out by means of metal bodies provided with resistances and controlled by temperature regulators, which can act directly through aluminum, teflon, silicone or other materials that can be adapted to the body that is to be reflected and to the template.

In a second embodiment, in order to place the templates (1) painted with the signs on their reverse side, which are to be transferred to the surface of areas (11) of the plates (10), suitable positioning frames are used which allow accommodating said templates (1) with the suitable spaces and in the necessary position.

The application of the transfer of the of the template (1) on its reverse side to the one provided with the signs to be transferred is obviously carried out through heat by means of the relevant pressure generated from the metallic pieces which, provided with resistances, achieve the required goal.

In viewing Figure 3, it can be observed how a support body or positioning frame (20) has a central area constituting the license plate or the like (10), the frame (20) incorporating in the front upper area a plurality of rounded projecting lugs (22) on which the tabs (34) and (34') of the template (1) incorporating characters (4) located on its reverse side are inserted by means of openings, the template (1) having transverse adhesive lines (5) on the upper and lower part.

It can be seen in Figure 4 that a frame (40) can have an alignment of projections or semi-rounded projecting lugs (41) which, acting as flanges, achieve incorporating and fixing the tabs (34) and (34') of the template (1), provided with transverse fixing and adhesive lines (5) on the upper and lower part, with a character (4) on its reverse side, which character shall be received on the surface of area (11) of the license plate (10) supported in the frame (40) due to the application of heat.

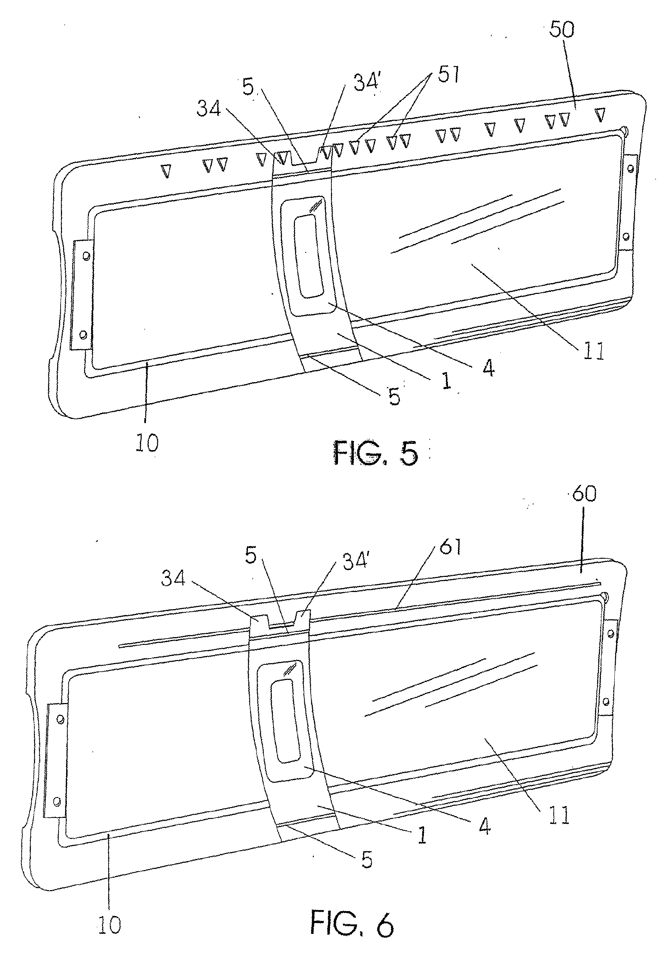

It can be observed in Figure 5 how the invention allows using a frame (50) in which a plate (10) is fixed with its relevant surface of area (11), the frame (50) having triangular-shaped fixing elements (51) which, acting as flanges, retain at the suitable points the tabs (34) and (34') of the template (1) bearing on its upper and lower part a transverse adhesive line (5), having on its reverse side the character (4) which is reflected on the surface of area (11) of the license plate (10) fixed to the frame (50) due to the action of the transfer elements generated from the suitable heat.

In viewing Figure 6, it can be observed that a frame (60) provided on the front upper part with an adhesive guide (61) incorporates in its central area a license plate (10) on which the transfer of a character (4) incorporated on the reverse side of a template (1) provided with transverse adhesive bands (5) on both the upper and lower part will be carried out, the adhesive guide (61) aiding in the suitable positioning of the template and the relevant transfer of the character (4).

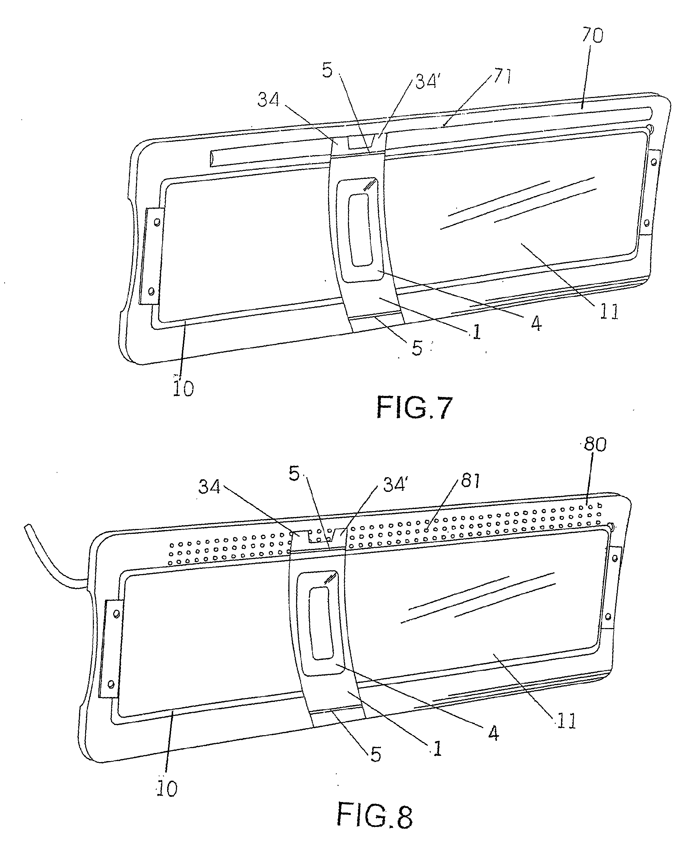

In viewing Figure 7, it is observed that the frame (70) has on the front upper area a resin line (71) in which the tabs (34) and (34') of a template (1) bearing on its reverse side a character (4), which will be transferred to the surface of area (11) due to the action of the heat and pressure carried out on the surface of the obverse of the template (1) provided with transverse adhesive lines (5) on both the upper and lower part, are fixed.

The support frame (80) incorporating and fixing a license plate (10) or similar element is also provided on the front upper part with an alignment of perforations (81) which, by means of auto-vacuum action, achieve retaining the tabs (34) and (34') of a template (1) bearing on its reverse side a character (4), and the template (1) having transverse adhesive lines (5) on both the upper and lower part.

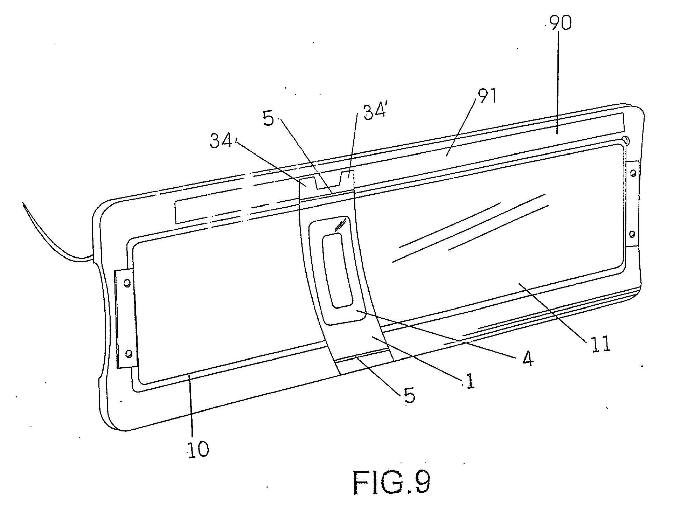

In Figure 9, the frame (90) incorporates an electrostatic current line (91) acting on the tabs (34) and (34') generated on the upper part of the template (1) bearing on its reverse side a character (4) incorporated by paint or any means considered suitable, having transverse adhesive lines (5) on both the upper and lower part.

The fixing lines preferably determined as lines located on the front upper part of the obverse of the positioning frame (20), (40), (50), (60), (70), (80), (90) bearing the license plate can be likewise located in all cases in the lower part, on the two sides or on one side.

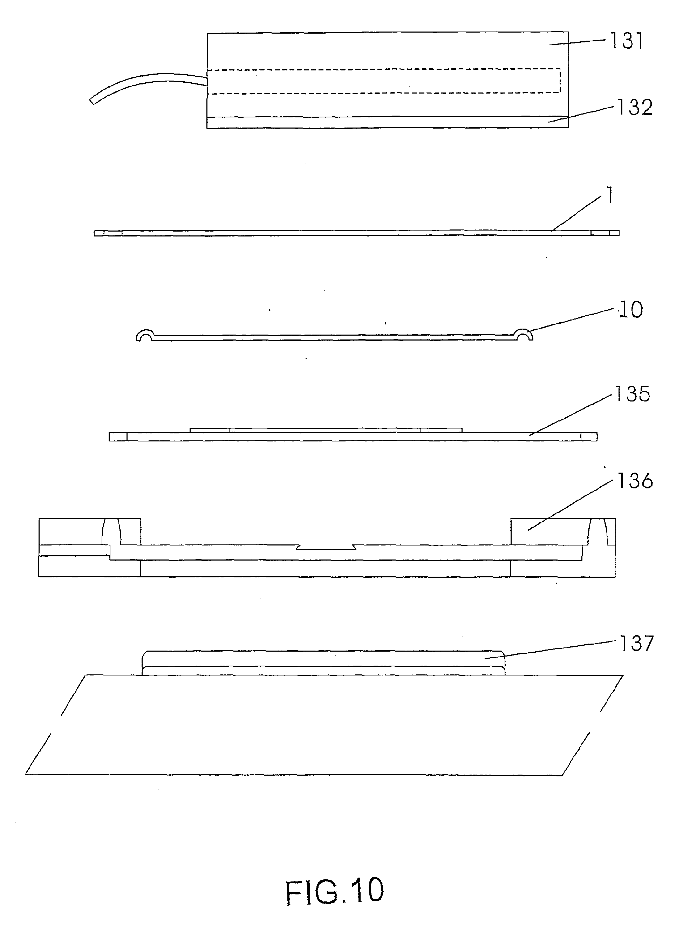

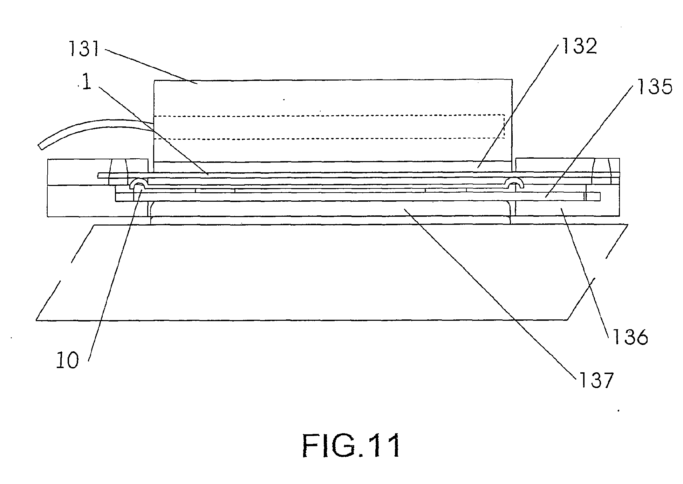

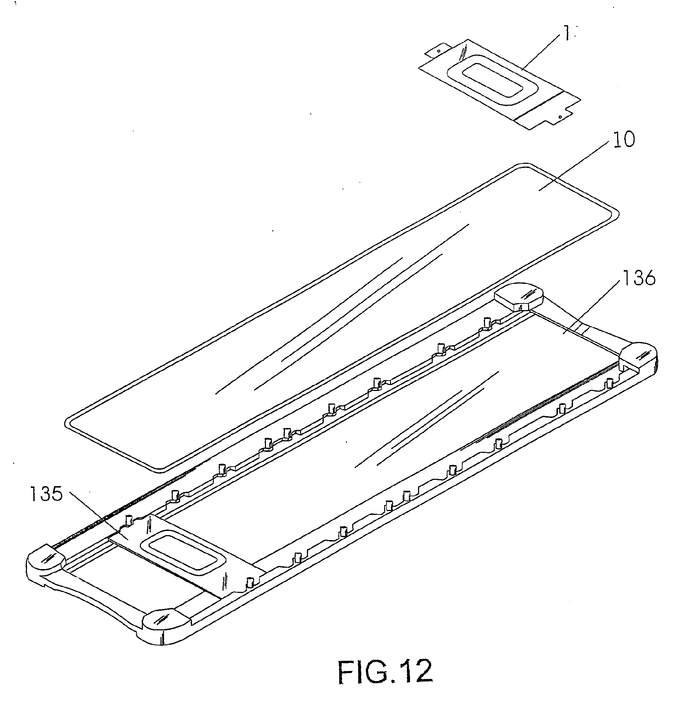

In viewing Figure 10, it can be observed that for painting acrylic or metallic license plates, a third embodiment incorporates a heating body (131) provided with an area (132) made of silicone rubber, a template (1) bearing the graphic or logo to be transferred to the aluminum plate (10), provided with a rib or not on its front part, a die (135), acting in collaboration with the template (1) and other elements, a die (135) for deep drawing on the rear part of the plate (10), the die (135) being located on the compounder (136), which positioning compounder (136) in turn is located on the lower tamper (137), as can be seen in Figures 11 and 12.

In repeating that described above, the invention uses a fixed or moving heating body (131) provided with a silicone rubber coating (132) and which will be adjacent to the surface of the template (1), generating the transfer of the graphic or logo to the upper surface of the aluminum plate (10), a die (135) located on the compounder (136), which in turn is located on the lower tamper (137), generating at the same time the deep drawing of the graphic on the rear part of the plate (10).

In summary, the characters or logos drawn or painted on the polyester films (1) constituting the template are transferred to the upper surface or front area of the planar plate (10) due to the action of the fixed or moving heat source (131).

It must be repeated that the transfer of the characters or logos is always carried out on the front part and, at the same time that the image with the relevant colors is being transferred, the deep drawing is carried out on the rear part with the aid of the die (135) located on the compounder (136), which is in turn located on the lower tamper (137), thereby achieving that the deep drawing and painting or the engraving and painting are carried out in a single operation.

The figure or character to be deep drawn and incorporated on the template (1) has previously been engraved either partially or completely on the male die (135), the silicone rubber (132) or a similar material to which the heat generated from the heating body (131) provided with resistances is transferred acting as the female element of the die.

At the time of deep drawing, the male die (135) located on the compounder (136) which is in turn located on the lower tamper (137) deep draws the plate (10) on the rear part, whereas on the opposite or upper part the aluminum plate (10) is clamped to the polyester template (1), and the template is in turn clamped to the silicone rubber (132), heated by said metallic piece (131) or heating body provided with resistances.

## Claims

1. A process for painting acrylic or metallic license plates, of the type constituted from completely planar plates (10) on which characters or logos can be engraved, **characterized in that** the characters or logos formed on polyester films are transferred to the completely planar plates (10) on either their front part or rear part due to the action of a fixed or moving heat source, the process being formed from polyester films (1) fixed to the plate (10) on planar or projecting areas (11), constituting identification means, the polyester films having transverse lines (5) configured by removable adhesives positioned on the side adjacent to the area to be coated on the license plate (10), the polyester body (1) being formed with a bond breaker coating (2) and varnish (3) on which the characters (4) constituting the logos or graphics to be transferred on the surface of areas (11) arranged on the plate (10) or the like are located, the transfer being carried out by a fixed or moving heat source, the polyester films (1) being removed and the characters or graphics (4) being positioned on areas (11) arranged on the plate (10).

2. A process for painting acrylic or metallic license plates according to claim 1, **characterized in that** the fixing of the characters (4) can be carried out by means of pressure.

3. A process for painting acrylic or metallic license plates according to claim 1,
**characterized in that** the fixing of the characters (4) on areas (11) arranged on the plates (10) can be carried out by means of adhesive.

4. A process for painting acrylic or metallic license plates according to claim 1, **characterized in that** the fixing of the characters (4) on areas (11) arranged on the plates (10) can be carried out by means of adhesive.

5. A process for painting acrylic or metallic license plates according to claim 1, **characterized in that** the fixing of the characters (4) arranged on the polyester films (1) on areas (11) incorporated on the plates (10) or the like can be carried out by electrostatic current.

6. A process for painting acrylic or metallic license plates according to claim 1, **characterized in that** the fixing of the characters (4) or the like arranged on the surface of the polyester film (1) can be carried out on areas (11) incorporated on the plates (10) or the like by means of centering columns or holes.

7. A process for painting acrylic or metallic license plates according to claim 1, **characterized in that** the fixing of the characters (4) arranged on the polyester film (1) can be carried out on areas (11) located on the plate (10) or the like by vacuum.

8. A process for painting acrylic or metallic license plates according to claim 1, **characterized in that** the fixing of the characters (4) located on the surface of the polyester film (1) on areas (11) located on the plate (10) or the like can be carried out by resin depositing.

9. A process for painting acrylic or metallic license plates, **characterized in that** in a second embodiment, it is formed from the incorporation of the format of the letters, numbers, insignias or signs (31) intended to be transferred to the surface of a license plate (21) on the reverse side of the templates (30) with special paints or with any other medium, a heat source is applied on the template (30), generally made of polyester, on the side opposite to the one with the graphics incorporated by special paints, the painted sign penetrating the part or surface (21) of the license plate or the like, the application of heat being carried out by metal bodies provided with resistances and controlled by temperature regulators such as aluminium, teflon, silicone or other materials that can be adapted to the body that is to be provided with the graphic and to the template (30).

10. A process for painting acrylic or metallic license plates according to claim 9, **characterized in that** the plate (21), receiving on its surface the graphics (31) incorporated on the reverse side of the template (30) provided with adhesive lines (32) and (33) and having tabs (22) projecting from the upper and lower part (34) and (34') or in only of them, are fixed on lugs (22) aligned in the front upper part of the frame (20).

11. A process for painting acrylic or metallic license plates according to claims 9 and 10, **characterized in that** the graphics (31) incorporated on the reverse side of the template (30) are fixed by means of projecting tabs (42) and (42') or lugs (41) existing on the front upper or lower area or on a side of the frame (40), the template (30) having or not having upper (32) and lower (33) adhesive lines.

12. A process for painting acrylic or metallic license plates according to claims 9 to 11, **characterized in that** the graphics (31) incorporated on the reverse side of the template (30) provided with upper (32) and lower (33) adhesive lines, or located sideways on one of its sides, positioned transversely, are retained on the frame (50) by means of retention elements (51) applied on tabs (42) and (42') which may also be located on one or two of its sides, being located on the surface of the license plate (21).

13. A process for painting acrylic or metallic license plates according to claims 9 to 12, **characterized in that** the frame (60) on which the license plate (21) will be fixed, in the surface of which license plate the graphics (31) existing in the template (30) provided with adhesive lines (32) in the upper part and (33) in the lower part, or located on one or two of its sides, will be transferred, is fixed by means of tabs (62) and (62') on an adhesive guide (61).

14. A process for painting acrylic or metallic license plates according to claims 9 to 13, **characterized in that** the frame (70) carrying the license plate (21) has a resin line (71) on the front lower part or on one of its sides; which resin line retains the tabs (72) and (72'), of a template (30) carrying the graphics (31) on its reverse side, having upper (32) and lower (33) adhesive lines.

15. A process for painting acrylic or metallic license plates according to claims 9 to 14, **characterized in that** the frame (80) carrying the license plate (21) has a plurality of perforations forming auto-vacuum fixing lines on the front upper part, the front lower part or on its sides, which auto-vacuum fixing lines retain the tabs (82) and (82') of a template (30) carrying the graphics (31) on its reverse side, the template (30) having upper (32) and lower (33) adhesive fixing lines.

16. A process for painting acrylic or metallic license plates according to claims 9 to 15, **characterized in that** the frame (90) carrying the license plate (21) incorporates an electrostatic current line in its front upper area, in its front lower area or on one of its two sides, which electrostatic current line fixes the tabs (82) and (82') projecting from the upper part of a template (30) carrying the graphics (31) on its reverse side and also incorporating adhesive lines (32) in the upper part and (33) in the lower part.

17. A process for painting acrylic or metallic license plates according to claims 9 to 16, **characterized in that** the templates (30) carrying letters, numbers, insignias or signs (31) incorporated by any means, especially with special paints, are preferably made of polyester.

18. A process for painting acrylic or metallic license plates according to claims 9 a 17, **characterized in that** the license plates (21) are preferably made of a thermoplastic material provided with resins.

19. A process for painting acrylic or metallic license plates according to claims 9 a 18, **characterized in that** the heat source configured from metal bodies provided with resistances and controlled by temperature regulators act on the outer surface of the template (30) on the side not provided with the characters (31).

20. A process for painting acrylic or metallic license plates according to claims 9 to 19, **characterized in that** pressure elements collaborate for the incorporation of the graphics or signs (31) located on the reverse side of the templates (30) on the obverse of which heat is applied.

21. A process for painting acrylic or metallic license plates, **characterized in that** in a third embodiment, it uses a heating body (131) provided with resistances having a surface (132) made of silicone rubber, which surface is heated due to the action of the heating body (131) and is positioned on the surface of the template (133) carrying the characters or logos due to the action of a male die (135) located on the compounder (136) and applying pressure on the plate (134) on its rear part, and at the same time, it carries out the deep drawing of the logo or character previously located on the male die.

22. A process for painting acrylic or metallic license plates according to claim 21, **characterized in that** the transfer of the character or logo located on the polyester template (133) is carried out at the same time that the aluminum plate (134) is deep drawn on its rear part by means of the action of a male die (135).
